# EUROPEAN PATENT APPLICATION

(11) **EP 4 648 071 A1**
(43) Date of publication of application: **12.11.2025**
(21) Application number: 25174218.5
(22) Date of filing: 05.05.2025
(51) Int. Cl.: H01F 7/02, H01F 13/00

(54) **MAGNETIZER**

(30) Priority: 08.05.2024 KR 20240060743
(71) Applicant: SAMSUNG SDI CO., LTD., Yongin-si, Gyeonggi-do 17084 (KR)
(72) Inventor: KIM, Minho, 17084 Yongin-si, Gyeonggi-do (KR)
(74) Representative: Gulde & Partner

(57) **Abstract**

A magnetizer may include a first frame member including a first accommodation portion configured to accommodate two or more first magnets arranged along a first direction with a same first polarity, and a second frame member including a second accommodation portion configured to accommodate two or more second magnets arranged with a second polarity different from the first polarity, and configured to maintain a state of being in contact with the first frame member by an attractive force between the two or more first magnets and the two or more second magnets.

## Description

### BACKGROUND

### 1. Field

Aspects of embodiments of the present disclosure relate to a magnetizer.

### 2. Description of the Related Art

Recently, rechargeable batteries have been widely applied not only to small devices, such as portable electronic devices, but also to medium-to-large devices, such as battery packs of hybrid vehicles or electric vehicles or power storage devices.

Such a rechargeable battery is a power generating device that may be formed in a stack structure of positive-electrode/separator/negative-electrode and capable of being repeatedly charged and discharged, in which, generally, the positive electrode includes lithium metal oxide as a positive active material, and the negative electrode may include a carbon-based negative active material, such as graphite, lithium ions emitted from the positive electrode during charging are intercalated into the carbon-based negative active material of the negative electrode, and during discharge, lithium ions contained in the carbon-based negative active material are intercalated into the lithium metal oxide of the positive electrode, such that charging and discharging may be repeated.

At this time, a graphite material, such as natural graphite, may be an example of the negative active material used in the negative electrode. This kind of graphite has a layered structure, and carbon atoms form a mesh structure such that it may be formed as a stack of a plurality of planarly spread layers.

During charging, lithium ions invade an edge surface of these graphite layers (the surface where the layers overlap) and diffuse between layers. Additionally, during discharge, lithium ions may desorb and be released from the edge of the layer. In addition, since the electrical resistivity of graphite in the plane direction of the layer is lower than that in the stacking direction of the layers, a conduction path for electrons detouring along the plane direction of the layer is created.

In this regard, a typical process of manufacturing the electrode plate (e.g., a negative electrode plate) of a lithium rechargeable battery using graphite is as follows.

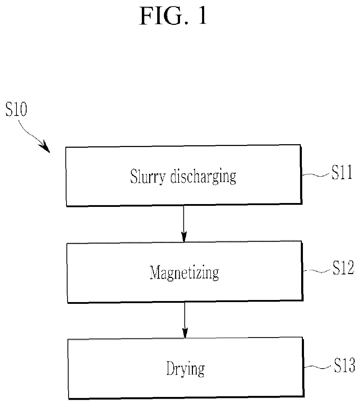

FIG. 1 is a flowchart showing a typical method of manufacturing an electrode plate.

Referring to FIG. 1, a method S10 for manufacturing an electrode plate includes a slurry discharge step S11 of discharging the slurry onto a substrate, a magnetizing step S12 of orienting graphite to a magnetic field, and a drying step S13 of drying the slurry.

Here, the magnetizing step S12 is a step of orienting the graphite contained in the negative electrode to a magnetic field in order to improve the charging performance of the negative electrode. More specifically, when forming the negative electrode, the [0,0,2] crystal plane of graphite is oriented in a magnetic field so that it is almost horizontal with respect to the negative electrode current collector, and this is fixed. In this case, since the edge surface of the graphite layer faces the positive electrode active layer, the insertion and desorption of lithium ions may be performed smoothly, or easily, and the electronic conduction path is shortened, thereby improving the electronic conductivity of the negative electrode, and thereby improving the charging performance of the battery.

To this end, a method of aligning the graphite by applying a magnetic field to the negative electrode slurry containing graphite as a carbon-based negative electrode active material using a magnetizer is applied when manufacturing the negative electrode.

In further detail, orientation refers to a process of making a direction of the graphite layer constant by passing the negative electrode coating layer over a magnetizer containing a powerful permanent magnet. If the orientation is good, the movement distance of lithium (Li) ions within the graphite is minimized or reduced, reducing resistance to movement and improving battery performance.

In a conventional magnetizer, when the permanent magnets are connected with opposite polarities, a horizontal magnetic field is formed therebetween. Therefore, the larger the size of the permanent magnet embedded in the magnetizer (e.g., the larger the size in the direction of movement of the substrate), the smaller the area with the magnetic field lying in the horizontal direction on the negative electrode coating layer, such that the orientation performance can be improved.

However, if the size of the permanent magnet is manufactured too large, the magnetization orientation may not be properly achieved during the manufacture of the magnet, resulting in size limitations. Therefore, it is desired to arrange a plurality of permanent magnets such that polarities thereof face in a same direction, and to generate a magnetic field such that the orientation is well implemented.

### SUMMARY

According to an aspect of embodiments of the present disclosure, a magnetizer having an improved orientation performance is provided.

However, aspects and technical problems to be solved by the present disclosure are not limited to the above, and other aspects and objects not mentioned herein will be understood from the following description by those skilled in the art.

According to one or more embodiments of the present disclosure, a magnetizer may include a first frame member including a first accommodation portion configured to accommodate two or more first magnets arranged along a first direction with a same first polarity, and a second frame member including a second accommodation portion configured to accommodate two or more second magnets arranged with a second polarity different from the first polarity, and configured to maintain a state of being in contact with the first frame member by an attractive force between the two or more first magnets and the two or more second magnets.

The first frame member may include a first base portion including an upper side and a lower side that are in contact (e.g., tight contact) with first magnets of the two or more first magnets, respectively, a first exterior wall portion at (e.g., coupled to) each of opposite ends of the first base portion, and a first cell barrier portion extending from the first base portion and between the first exterior wall portions, and located between first magnets of the two or more first magnets adjacent to each other.

The second frame member may include a second base portion including an upper side and a lower side that are in contact (e.g., tight contact) with second magnets of the two or more second magnets, respectively, a second exterior wall portion at (e.g., coupled to) each of opposite ends of the second base portion, and a second cell barrier portion extending from the second base portion and between the second exterior wall portions, and located between second magnets of the two or more second magnets adjacent to each other.

The first accommodation portion may be located on each of an upper side and a lower side of the first frame member.

The second accommodation portion may be located on each of an upper side and a lower side of the second frame member.

Three first accommodation portions may be located along a length direction of the first frame member on each of an upper side and a lower side of the first frame member.

Three second accommodation portions may be located along a length direction of the second frame member on each of an upper side and a lower side of the second frame member.

In each of the two or more first magnets, an N pole may be above an S pole, and, in each of the two or more second magnets, an S pole may be above an N pole.

In each of the two or more first magnets, an N pole may be below an S pole, and, in each of the two or more second magnets, an S pole may be below an N pole.

The magnetizer may include a protruding portion protruding from a side of a frame member of the first frame member and the second frame member, and an insertion portion defined in another frame member of the first frame member and the second frame member, having a size corresponding to the protruding portion, and in which the protruding portion is inserted.

A magnetizer according to one or more embodiments of the present disclosure may include at least two first magnets configured as a set, and at least two second magnets configured as another set. Therefore, the magnetizer may increase an area of magnetization in the vertical direction by making the period of polarity change longer compared to a magnetizer (not shown) in which permanent magnets are arranged with alternating polarity.

In addition, in the magnetizer according to one or more embodiments of the present disclosure, the first frame member and the second frame member are coupled by the magnetic force of the first magnet and the second magnet without a separate fastening means. Therefore, the first frame member and the second frame member can be easily separated using general equipment used in a manufacturing plant. That is, a maintenance process of the magnetizer according to an embodiment can be performed very smoothly, or easily.

In addition, it can be confirmed that the magnetizer according to one or more embodiments has a significantly improved effect of orienting graphite to a magnetic field compared to a conventional magnetizer.

### BRIEF DESCRIPTION OF THE DRAWINGS

FIG. 1 is a flowchart showing a typical method of manufacturing an electrode plate.
FIG. 2 is a perspective view showing a rechargeable battery.
FIG. 3 is a cross-sectional view showing a substrate and an active material layer used for manufacturing an electrode plate included in an electrode assembly of the rechargeable battery of FIG. 2.
FIG. 4 is a perspective view showing a magnetizer according to various embodiments.
FIG. 5 is a side view showing the magnetizer of FIG. 4.
FIG. 6 is a side view showing a process of orienting a slurry applied to a substrate by a magnetizer, according to various embodiments.
FIG. 7 is a side view showing a first frame member and a second frame member according to various embodiments.
FIG. 8 is a perspective view showing a magnetizer according to various embodiments.
FIG. 9 shows a measurement result of magnetic vector due to a magnetizer according to various embodiments.
FIG. 10 shows a measurement result of magnetic vector due to a magnetizer according to a comparative example.

**DESCRIPTION OF SYMBOLS**

| | | | |
|---|---|---|---|
| 100, 200: | magnetizer | 110, 210: | first frame member |
| 111: | first accommodation portion | 112: | first base portion |
| 113: | first exterior wall portion | 114: | first cell barrier portion |
| 115: | first magnet | 120, 220: | second frame member |
| 121: | second accommodation portion | 122: | second base portion |
| 123: | second exterior wall portion | 124: | second cell barrier portion |
| 125: | second magnet | 130: | protruding portion |
| 140: | insertion portion | | |

### DETAILED DESCRIPTION

Some example embodiments are described in further detail herein to further illustrate the present invention. However, these embodiments are provided to facilitate understanding for those skilled in the art of the present disclosure and may be embodied in many different forms, and the present disclosure is not to be construed as being limited to the embodiments set forth herein. Rather, these embodiments are provided so that this disclosure will be thorough and complete, and will fully convey the scope of the present inventive concept to those skilled in the art.

In addition, in the accompanying drawings, sizes or thicknesses of various components may be exaggerated for brevity and clarity, and like numbers refer to like elements throughout. As used herein, the term "and/or" includes any one and all combinations of one or more of the associated listed items. In addition, it is to be understood that when an element A is referred to as being "connected to" an element B, the element A can be directly connected to the element B, or one or more intervening elements C may be present therebetween such that the element A and the element B may be indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections are not to be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present disclosure.

In addition, terms related to a space, such as "beneath," "below," "lower," "above," "upper," or the like, may be used for better understanding of elements or features shown in the drawing. It is to be understood that such spatially relative terms are intended to encompass different orientations of the device in use or operation, in addition to the orientation depicted in the figures. For example, if the element or feature in the figures is turned over, elements described as "below" or "beneath" other elements or features would then be oriented "on" or "above" the other elements or features. Thus, the example term "below" can encompass both orientations of above and below.

Before describing a magnetizer according to an embodiment, a rechargeable battery including an electrode plate that may be manufactured by using the magnetizer according to an embodiment will be described in further detail.

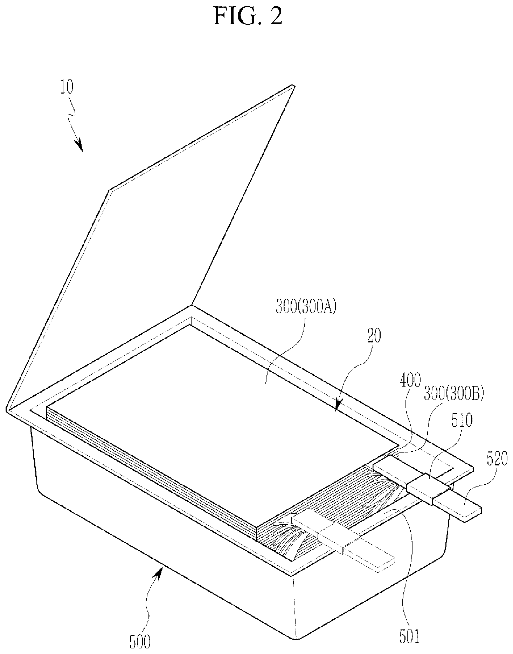

FIG. 2 is a perspective view showing a rechargeable battery.

Referring to FIG. 2, a rechargeable battery 10 may include an electrode assembly 20 and a case 500.

The electrode assembly 20 may include a plurality of electrode plates 300 and a separator 400. In further detail, the plurality of electrode plates 300 may include a first electrode plate 300A and a second electrode plate 300B.

The electrode assembly 20 may have a form in which laminates including the first electrode plate 300A, the second electrode plate 300B, and the separator 400 are repeatedly wound or stacked.

For example, the electrode assembly 20 may be of a stacked type, in which the electrode plates 300A and 300B are disposed to be stacked in multiple layers. For example, the electrode assembly 20 may be of a repeatedly wound jelly-roll type. In the present disclosure, the electrode assembly 20 of the stacked type will be described as an example.

In a typical manufacturing process of the electrode assembly 20 of the stacked type, a primary stack process and a secondary stack process may be performed.

In the primary stack process, full negative electrodes and full anodes may be stacked. Here, the full negative electrode may indicate ones excluding a first electrode plate 300A, which is outermost among a plurality of first electrode plates 300A. In addition, the full anode may be the second electrode plate 300B.

In the secondary stack process, a half negative electrode may be stacked on one side of at least one of outermost opposite sides, based on a stacking direction. Here, the half negative electrode may be the outermost first electrode plate 300A among the first electrode plate 300A.

FIG. 2 illustrates, for convenience of illustration, an example of the electrode assembly 20 in which the half negative electrode is stacked on an outermost upper side of the electrode assembly 20; however, the half negative electrode may be stacked on each of an outermost upper side and outermost both sides of the electrode assembly 20.

Here, the full negative electrode and the full anode are ones in which the active material layer is applied to both surfaces of a substrate, and the half negative electrode is one in which active material layer is located on only one surface of the substrate. Further detailed description of the full negative electrode, the full anode, and the half negative electrode is not included herein.

The separator 400 may be interposed between the first electrode plate 300A and the second electrode plate 300B. The separator 400 may prevent or substantially prevent a short circuit of the first electrode plate 300A and the second electrode plate 300B, and may allow movement of lithium ions. To this end, the separator 400 may be formed in a size relatively greater than the first electrode plate 300A and the second electrode plate 300B.

The separator 400 may include a porous polymer film or a porous non-woven fabric. Here, the porous polymer film may be configured in a single layer or multiple layers including a polyolefin-based polymer, such as ethylene polymer, propylene polymer, ethylene/butene copolymer, ethylene/hexene copolymer, and ethylene/methacrylate copolymer. The porous non-woven fabric may include glass fiber, polyethylene terephthalate fiber, or the like, of a high melting point. However, the present disclosure is not limited thereto, and depending on an embodiment, the separator may be a high heat-resistive the separator containing ceramic (e.g., ceramic coated separator (CCS)).

The separator 400 may be cut into unit lengths and disposed between the first electrode plate 300A and the second electrode plate 300B, or one separator 400 formed in a ribbon shape may be disposed between the first electrode plate 300A and the second electrode plate 300B, in a zigzag form. In an embodiment, the separator 400 may be installed to be wound along a first direction between the first electrode plate 300A and the second electrode plate 300B.

As such, an arrangement form of the separator 400 is not limited to a particular form, but in the present embodiment, it is described, for convenience of description, that the separator 400 is cut into the unit lengths and disposed between the first electrode plate 300A and the second electrode plate 300B.

The case 500 may accommodate the electrode assembly 20. The electrode assembly 20 described above may be accommodated in the case 500 together with an electrolyte.

Here, the electrolyte may be a non-aqueous electrolyte. The electrolyte may include a lithium salt and an organic solvent. The organic solvent may include one or more selected from the group consisting of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

The case 500 may be any of a pouch type, a cylindrical type, and a prismatic type. The case 500 of the pouch type may be manufactured by bending an exterior material of a plate shape, and then pressing or drawing a surface, to have a recess on the surface.

The electrode assembly 20 may be accommodated in a recess (not shown). A sealing portion 501 is provided on the exterior circumference of the recess, and while the electrode assembly 20 is accommodated in the recess, the sealing portion 501 may be sealed through a method such as heat fusion.

In the plurality of electrode plates, the first electrode plate 300A described above may be a negative electrode, and the second electrode plate 300B may be a positive electrode, or vice versa. The first electrode plate 300A and the second electrode plate 300B may be electrically connected to the outside of the rechargeable battery 10 through a strip terminal 520.

In addition, an insulation tape 510 may be attached to a portion in the strip terminal 520 in contact with the case 500. The insulation tape 510 may prevent or substantially prevent the strip terminal 520 and the case 500 from being electrically connected.

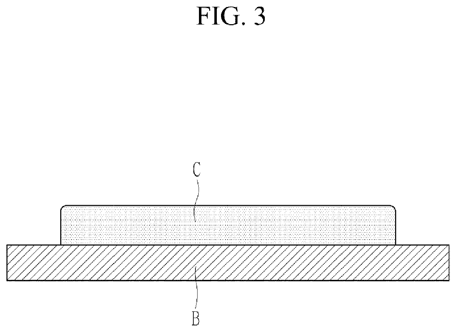

FIG. 3 is a cross-sectional view showing a substrate and an active material layer used for manufacturing an electrode plate included in the electrode assembly of the rechargeable battery of FIG. 2.

Referring to FIG. 3, in a manufacturing process of the electrode plate included in the electrode assembly, the electrode plate may be manufactured by applying an active material layer C on a substrate B.

The substrate B may be a current collector, and the current collector may include a known conductive material, to the extent that a chemical reaction does not occur within the rechargeable battery. For example, the current collector may include any of stainless steel, nickel (Ni), aluminum (Al), titanium (Ti), copper (Cu), and an alloy thereof, and may be provided in any of various forms, such as a film, sheet, foil, or the like.

Although not shown in the drawings, the substrate B may include a current collector and an uncoated region.

The active material layer C may be applied to at least one surface of the current collector. The active material layer C may be applied to a remaining portion excluding an edge region of the current collector. The edge region of the current collector may be the uncoated region to which the active material layer C is not applied.

In an embodiment, the active material layer C may be located in a portion of at least one surface of the substrate B, and may have an end portion formed in multiple stages. For example, an edge of the active material layer C may be located to be spaced apart from the edge of the substrate B to form the multiple stages. In an embodiment, a non-illustrated protection film may be attached to the boundary portion between the active material layer C and the substrate B.

A method for locating the active material layer C on the substrate B may be, for example, a method using a slit coater M, but is not limited thereto, and any of various slurry (active material) coating methods may be used.

The magnetizer according to an embodiment may magnetize the slurry discharged by the slit coater M.

In an embodiment, the active material layer C may further include a binder (not shown) and a conductive material (not shown).

The binder (not shown) may mediate coupling between the substrate B and the active material, thereby improving mechanical stability. For example, the binder may be an organic binder or an aqueous binder, and may be used together with a thickener such as carboxymethyl cellulose (CMC). In an embodiment, the organic binder may be any of vinylidene fluoride-hexafluoropropylene copolymer (PVDF-co-HFP), polyvinylidene fluoride (PVDF), polyacrylonitrile, and polymethylmethacrylate, and the aqueous binder may be styrenebutadiene rubber (SBR), but the present disclosure is not limited thereto.

The conductive material (not shown) may improve the electrical conductivity of the rechargeable battery. In an embodiment, the conductive material may include a metal-based material. In an embodiment, the conductive material may include a typical carbon-based conductive material. In an embodiment, the conductive material may include one of graphite, carbon black, graphene, and carbon nanotube. In an embodiment, the conductive material may include carbon nanotube, but is not limited thereto.

A magnetizer according to an embodiment will be described in further detail with reference to the drawings.

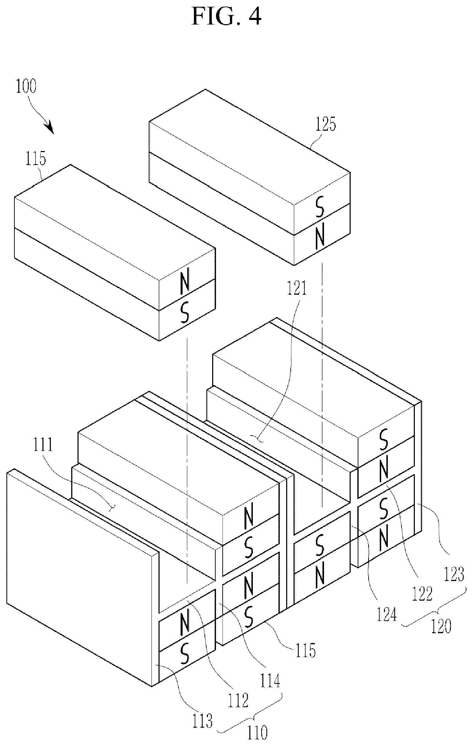

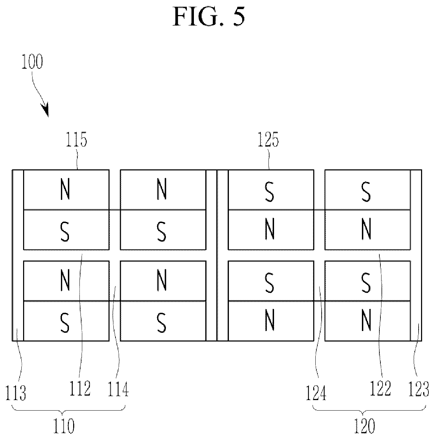

FIG. 4 is a perspective view showing a magnetizer according to an embodiment; and FIG. 5 is a side view showing the magnetizer of FIG. 4.

Referring to FIG. 4 and FIG. 5, a magnetizer 100 according to an embodiment may include a first frame member 110 and a second frame member 120.

The first frame member 110 may include a first accommodation portion 111 in which two or more first magnets 115 are accommodated. The first accommodation portion 111 may be located on each of an upper side and a lower side of the first frame member 110. The first magnets 115 may be disposed with a same polarity, toward the first direction.

The first frame member 110 may include, for example, a first base portion 112, a first exterior wall portion 113 (the first frame 110 member may include one or more of the first exterior wall portions 113), and a first cell barrier portion 114.

The first magnets 115 may be in contact (e.g., tight contact) with each of an upper side and a lower side of the first base portion 112. One or more of the first magnets 115 may be in contact (e.g., tight contact) with an upper side of the first base portion 112; and one or more others of the first magnets 115 may be in contact (e.g., tight contact) with a lower side of the first base portion 112.

The one or more first exterior wall portions 113 may be coupled to each of both, or opposite, ends of the first base portion 112.

The first cell barrier portion 114 may be disposed in the first base portion 112 and between the first exterior wall portions 113, and may be located between the first magnets 115 adjacent to each other. The first cell barrier portion 114 may have a dimension with respect to the first direction (e.g., vertical to a planar surface of the first base portion 112 that is in contact with the first magnets 115) that is less than a dimension of the first exterior wall portion 113 along the same direction. In some aspects, the first cell barrier portion 114 and the first magnets 115 are configured and disposed such that a gap remains between two adjacent ones of the first magnets 115 (e.g., between two neighboring first magnets disposed over the same side of the first base portion 112). In some aspects, the first cell barrier portion 114 may be disposed in the first base portion 112 and between two first exterior wall portions 113 (e.g., between one of the first exterior wall portions 113 disposed at a first end of the first base portion 112 and another one of the first exterior wall portions 113 disposed at a second end of the first base portion 112 opposite to the first end).

The second frame member 120 may include a second accommodation portion 121 in which two or more second magnets 125 are accommodated. The second accommodation portion 121 may be located on each of an upper side and a lower side of the second frame member 120.

The second magnets 125 may be disposed with a different polarity from the polarity of the first magnets 115,e.g., the polarity of the first magnets 115 may be opposite to the polarity of the second magnets 125 with respect to the first direction (e.g., vertical to a planar surface of the first base portion 112 that is in contact with the first magnets 115). In an embodiment, N poles of the first magnets 115 may be disposed above their S poles, and S poles of the second magnets 125 may be disposed above their N poles. An S pole of one of (or each of) the first magnets 115 may be disposed below its N pole, and an N pole of one of (or each of) the second magnets 125 may be disposed below its S pole. However, although not shown in the drawings, an N pole of one of (or each of) the first magnets 115 may be disposed below its S pole, and an S pole of one of (or each of) the second magnets 125 may be disposed below its N pole.

The second frame member 120 may maintain a state of being in contact with the first frame member 110 by an attractive force between the first magnet 115 and the second magnet 125. This may be achieved, for example, by the arrangement and orientation of the magnets 115, 125 relative to on another, e.g., by arranging the first magnets 115 with opposite polarity to the second magnets 125.

The second frame member 210 may include, for example, a second base portion 122, a second exterior wall portion 123 (the second frame 210 member may include one or more of the second exterior wall portions 123), and a second cell barrier portion 124.

The second magnets 125 may be in contact (e.g., tight contact) with each of an upper side and a lower side of the second base portion 122. One or more of the second magnets 125 may be in contact (e.g., tight contact) with an upper side of the second base portion 122; and one or more others of the second magnets 125 may be in contact (e.g., tight contact) with a lower side of the second base portion 122.

The one or more second exterior wall portions 123 may be coupled to each of both, or opposite, ends of the second base portion 122.

The second cell barrier portion 124 may be disposed in the second base portion 122 and between the second exterior wall portions 123, and may be located between the second magnets 125 adjacent to each other. The second cell barrier portion 124 may have a dimension with respect to the first direction (e.g., vertical to a planar surface of the second base portion 122 that is in contact with the second magnets 125) that is less than a dimension of the second exterior wall portion 123 along the same direction. In some aspects, the second cell barrier portion 124 and the second magnets 125 are configured and disposed such that a gap remains between two adjacent ones of the second magnets 125 (e.g., between two neighboring second magnets disposed over the same side of the second base portion 122). In some aspects, the second cell barrier portion 124 may be disposed in the second base portion 122 and between two second exterior wall portions 123 (e.g., between one of the second exterior wall portions 123 disposed at a first end of the second base portion 122 and another one of the second exterior wall portions 123 disposed at a second end of the second base portion 124 opposite to the first end).

The magnetizer 100 according to an embodiment described above includes at least two first magnets 115 configured as a set in the first frame member 110, and at least two second magnets 125 configured as a set in the second frame member 120. Therefore, the magnetizer 100 according to an embodiment may increase an area of magnetization in the vertical direction by making the period of polarity change longer compared to a magnetizer (not shown) in which permanent magnets are arranged with alternating polarity.

In addition, according to the conventional magnetizer in which permanent magnets are disposed on one frame, in the case that maintenance is needed, due to the attractive force between permanent magnets, the separation of the permanent magnet from the frame is very difficult or impossible such that the only solution is to manufacture a new frame.

However, in the magnetizer 100 according to an embodiment, the first frame member 110 and the second frame member 120 are coupled by the magnetic force of the first magnet 115 and the second magnet 125 without a separate fastening means. Therefore, the first frame member 110 and the second frame member 120 can be easily separated using general equipment used in a manufacturing plant. That is, the maintenance process of the magnetizer according to an embodiment can be performed very smoothly, or easily. The magnetizer 110 may be configured such that one of the first exterior wall portions 113 of the first frame member 110 is in direct physical contact with one of the second exterior wall portions 123 of the second frame member 120.

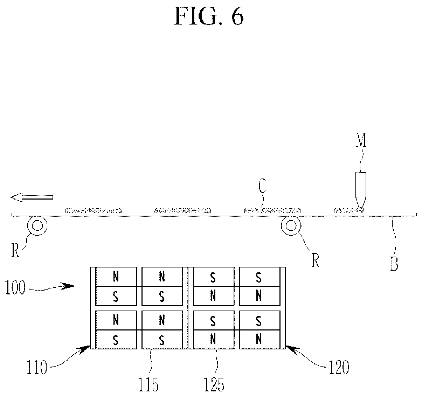

FIG. 6 is a side view showing a process of orienting a slurry applied to a substrate by a magnetizer.

Referring to FIG. 6, during a process that the magnetizer 100 according to an embodiment magnetizes the active material layer C, the first frame member 110 and the second frame member 120 may be located in parallel to a direction along which the substrate B applied with the active material layer C is transported.

In an embodiment, the substrate B may be in contact (e.g., tight contact) with a plurality of rollers R, and may be transported by a roll-to-roll method. The slit coater M may discharge the slurry on a surface of the substrate B, and the active material layer C may be generated on the substrate B. The magnetizer 100 may be installed to be adjacent and parallel to the substrate B. The magnetizer 100 may be installed such that the base portions of the frame members are parallel to the substrate B and/or parallel to a transport direction along which the substrate is moved. The magnetizer 100 may be installed such that the vertical magnetic field component of the magnetizer 100 is perpendicular to the substrate B and/or perpendicular to a transport direction along which the substrate is moved.

Accordingly, a magnetic field generated by the magnetizer 100 according to an embodiment may be generated on the active material layer C on the substrate B, such that magnetic field orientation of graphite may be smoothly progressed.

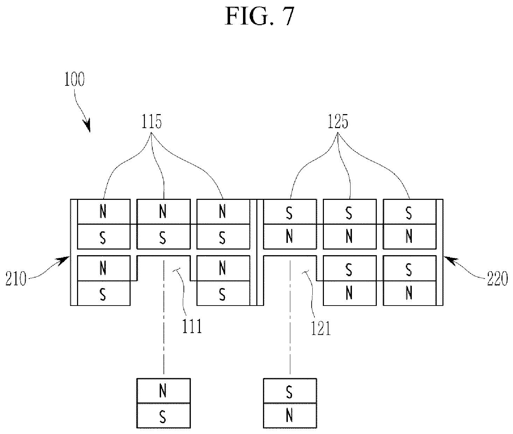

FIG. 7 is a side view showing the first frame member and the second frame member according to various embodiment. Each of the frame members may be configured to host a plurality of magnets (e.g., four magnets, six magnets, only as examples). The plurality of magnets may be hosted in the respective accommodation portions. Each of the magnets may be a magnet row (e.g., a row of more than one magnet element). Illustratively, the magnet row may be arranged along a direction perpendicular to the cross sections shown in the figures (e.g., in FIG.5 and in FIG. 7). Each of the frame members may be configured to host a plurality of magnet rows (e.g., four magnet rows, six magnet rows, only as examples). The plurality of magnets rows may be hosted in the respective accommodation portions.

Referring to FIG. 7, in a first frame member 210 according to various embodiments, three first accommodation portions 111 may be located along a length direction of the first frame member 210, on each of an upper side and a lower side of the first frame member 210. The length direction may be directed from one end of a respective base portion having an exterior wall portion attached thereto to another end of the respective base portion having another exterior wall portion attached thereto.

In addition, in a second frame member 220, three second accommodation portions 121 may be located along a length direction of the second frame member 220, on each of an upper side and a lower side of the second frame member 220. The frame members 210, 220 shown in FIG. 7 may be configured in a same of similar way as the frame members 110, 120 described herein. However, the number of magnets and the number of cell barrier portions included in a frame member may be modified accordingly.

In various embodiments, at most three first magnets 115 (or magnet rows) may be installed on the first frame member 210 (along the length direction), and at most three second magnets 125 (or magnet rows) may be installed on the second frame member 220 (along the length direction), which may be appropriate to orient the active material layer applied on the substrate. In other embodiments, at most two first magnets 115 (or magnet rows) may be installed on the first frame member 110 (along the length direction), and at most two second magnets 125 (or magnet rows) may be installed on the second frame member 120 (along the length direction), which may be appropriate to orient the active material layer applied on the substrate.

In some aspects, in a case of the magnetizer 100 in which four or more than four first magnets 115 (or magnet rows) are installed on the first frame member 210 (along the length direction) and four or more than four second magnets 125 are installed on the second frame member 220 (along the length direction), an entire length of each of the first magnet 115 and the second magnet 125 may be configured to be excessively long, and it may be difficult to generate a magnetic field sufficient for the orientation.

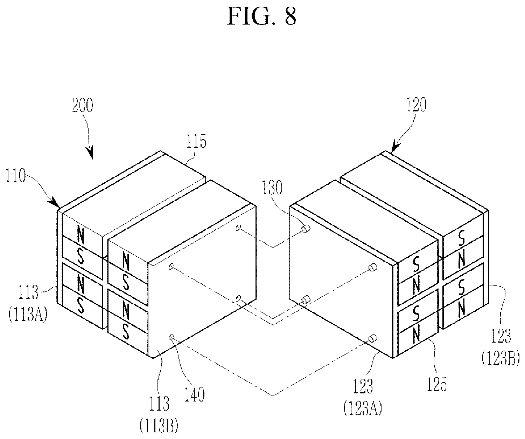

FIG. 8 is a perspective view showing the magnetizer according to various embodiments.

Referring to FIG. 8, a magnetizer 200 according to various embodiments may include coupling elements (e.g., a protruding portion 130 and an insertion portion 140) to couple, for example, two frame members of the magnetizer 200 to one another. The magnetizer 200 shown in FIG. 8 may be configured in a same of similar way as the magnetizer 100 described herein. However, the magnetizer 200 may include coupling means to (mechanically, e.g., by a form fit) couple one of the frame members to another one of the frame members of the magnetizer 200. The coupling means are described in the following as corresponding sets of one or more protruding portions 130 and one or more insertion portions 140.

The protruding portion 130 may protrude from a side of one of the first frame member 110 and the second frame member 120. The shape of the protruding portion 130 may be, for example, a cylindrical shape, but is not limited thereto, and the shape of the protruding portion 130 may be any of various shapes, such as a triangular pillar shape, a square pillar shape, or the like.

The insertion portion 140 may be defined in a remaining one among the first frame member 110 and the second frame member 120, and may have a size corresponding to the protruding portion 130, and the protruding portion 130 may be inserted therein. For such a purpose, the insertion portion 140 may have a shape corresponding to the protruding portion 130.

For purposes of description, it is assumed that the protruding portion 130 may be installed on the second frame member 120, and the insertion portion 140 is installed on the first frame member 110.

The first frame member 110 may include two first exterior wall portions 113A and 113B, and the second frame member 120 may also include two second exterior wall portions 123A and 123B. The insertion portion 140 may be located in the first exterior wall portion 113B in contact with the second frame member 120 among the two first exterior wall portions 113A and 113B. In addition, the protruding portion 130 may be located in the second exterior wall portion 123A in contact with the first frame member 110 among the two second exterior wall portions 123A and 123B.

In the magnetizer 200 according to the present embodiment described above, when the first frame member 110 and the second frame member 120 are coupled to each other, the protruding portion 130 may be accommodated in the insertion portion 140.

Accordingly, the first frame member 110 and the second frame member 120 may be located precisely on the target positions. Therefore, the magnetizer 200 may generate a strong magnetic field, and the effect of magnetic field orientation with respect to graphite may be further improved.

According to various embodiments, a magnetizer is provided (e.g., as described herein). The magnetizer may include a first frame member having one or more first accommodation portions configured to accommodate two or more first magnets. The magnetizer may include a second frame member having one or more second accommodation portions configured to accommodate two or more second magnets. The first frame member and the second frame member and the orientation of the first and second magnets may be configured to couple the first and second frame member to one another by an attractive force between the first magnets and the second magnets.

It may be confirmed through experiments described herein that an effect of magnetic field orientation of graphite by the magnetizer according to an embodiment is improved compared to a conventional magnetizer.

A magnetizer according to an embodiment is the magnetizer shown in FIG. 4, and a magnetizer according to a comparative example is a typical magnetizer (not shown) in which a plurality of permanent magnet is disposed with alternating polarity.

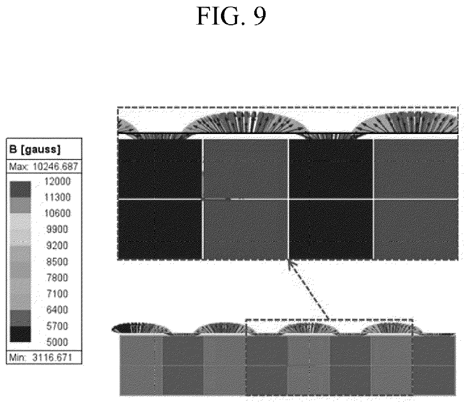

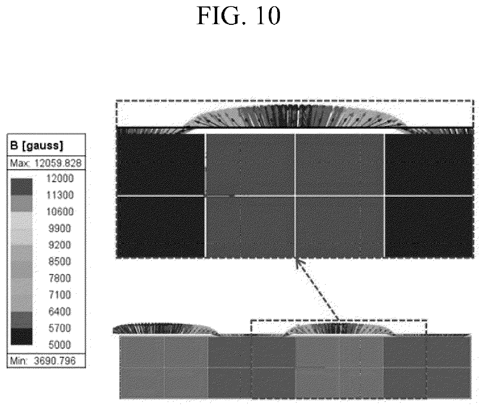

FIG. 9 shows a measurement result of magnetic vector due to a magnetizer according to an embodiment. FIG. 10 shows a measurement result of magnetic vector due to a magnetizer according to the comparative example.

Referring to FIG. 9 and FIG. 10, in the case of a magnetizer according to an embodiment, a maximum value and a minimum value of magnetic field value has increased by generally 18%, compared to a magnetizer according to the comparative example. In particular, considering that the minimum value is obtained in the vector field perpendicular to the ground (e.g., in |Bz| direction), the increase of the minimum value by 18% is very meaningful.

In addition, when the mean (|Bz|) of the magnetizer (the average value of the absolute value of the magnetic field value vector perpendicular to the ground) of the embodiment and the comparative example are compared, 4,650 G (gauss) was measured according to a magnetizer according to the comparative example, and 4,750 G was measured according to a magnetizer according to an embodiment. A magnetizer according to an embodiment provides an increase of about 2% compared to a magnetizer according to the comparative example.

As described above, it has been experimentally confirmed that the magnetizer according to an embodiment provides stronger magnetic field in the vertical direction compared to the conventional magnetizer. Therefore, it can be confirmed that the magnetizer according to an embodiment has a significantly improved effect of orienting graphite to a magnetic field compared to a conventional magnetizer.

While the present disclosure has been described in connection with what are presently considered to be some practical embodiments, the drawings and the detailed description of the present disclosure which are described above are merely illustrative and provided for the purpose of describing the present invention, and are not to be interpreted as limiting the scope of the present disclosure, which is set forth in the claims. Therefore, it will be understood by those skilled in the art that various modifications and other equivalent embodiments may be made from the present disclosure. Accordingly, a technical protection scope of the present disclosure is to be defined by the claims.

## Claims

1. A magnetizer (100, 200), comprising:
a first frame member (110, 210) comprising a first accommodation portion (111) configured to accommodate two or more first magnets (115) arranged with a same first polarity; and
a second frame member (120, 220) comprising a second accommodation portion (121) configured to accommodate two or more second magnets (125) arranged with a second polarity different from the first polarity, and configured to maintain a state of being in contact with the first frame member (110, 210) by an attractive force between the two or more first magnets (115) and the two or more second magnets (125).

2. The magnetizer (100, 200) as claimed in claim 1, wherein the first frame member (110, 210) comprises:
a first base portion (112) comprising an upper side and a lower side that are in contact with first magnets (115) of the two or more first magnets, respectively;
a first exterior wall portion (113) at each of opposite ends of the first base portion (112); and
a first cell barrier portion (114) extending from the first base portion (112) and between the first exterior wall portions (113), and located between first magnets (115) of the two or more first magnets adjacent to each other.

3. The magnetizer (100, 200) as claimed in claim 1 or 2, wherein the second frame member (120, 220) comprises:
a second base portion (122) comprising an upper side and a lower side that are in contact with second magnets (125) of the two or more second magnets, respectively;
a second exterior wall portion (123) at each of opposite ends of the second base portion (122); and
a second cell barrier portion (124) extending from the second base portion (122) and between the second exterior wall portions (123), and located between second magnets (125) of the two or more second magnets adjacent to each other.

4. The magnetizer (100, 200) as claimed in any one of claims 1 to 3, wherein the first accommodation portion (111) is located on each of an upper side and a lower side of the first frame member (110, 210).

5. The magnetizer (100, 200) as claimed in any one of claims 1 to **4,** wherein the second accommodation portion (121) is located on each of an upper side and a lower side of the second frame member.

6. The magnetizer (100, 200) as claimed in any one of claims 1 to 5, wherein two first accommodation portions are located along a length direction of the first frame member on each of an upper side and a lower side of the first frame member; and/or
wherein two second accommodation portions are located along a length direction of the second frame member on each of an upper side and a lower side of the second frame member.

7. The magnetizer (100, 200) as claimed in any one of claims 1 to 5,
wherein three first accommodation portions are located along a length direction of the first frame member on each of an upper side and a lower side of the first frame member; and/or
wherein three second accommodation portions are located along a length direction of the second frame member on each of an upper side and a lower side of the second frame member.

8. The magnetizer (100, 200) as claimed in any one of claims 1 to 7, wherein, in each of the two or more first magnets (115), an N pole is above an S pole, and, in each of the two or more second magnets (125), an S pole is above an N pole; or
wherein, in each of the two or more first magnets (115), an N pole is below an S pole, and, in each of the two or more second magnets (125), an S pole is below an N pole.

9. The magnetizer (100, 200) as claimed in any one of claims 1 to 8, comprising:
one or more first coupling elements at a side of the first frame member and one or more second coupling elements at a side of the second frame member to mechanically couple the first frame member and the second frame member to one another.

10. The magnetizer (100, 200) as claimed in any one of claims 1 to 8, comprising:
a protruding portion (130) protruding from a side of a frame member of the first frame member and the second frame member; and
an insertion portion (140) defined in another frame member of the first frame member and the second frame member, having a size corresponding to the protruding portion (130), and in which the protruding portion (130) is inserted in the case that the first frame member is attached to the second frame member.

11. The magnetizer (100, 200) as claimed in any one of claims 1 to 10, wherein all of the two or more first magnets (115) have a same first magnetic field orientation, and
wherein all of the two or more second magnets (125) have a same second magnetic field orientation opposite to the first magnetic field orientation.

12. The magnetizer (100, 200) as claimed in any one of claims 1 to 11, wherein the two or more first magnets (115) are arranged along a first direction with a same first polarity, and/or
wherein the two or more second magnets (125) are arranged along the/a first direction with a same second polarity opposite the first polarity.

13. The magnetizer (100, 200) as claimed in any one of claims 1 to 12, wherein two or more first magnets (115) are arranged between two first exterior wall portions (113) of the first frame member (110, 210), and
wherein two or more second magnets (125) are arranged between two second exterior wall portions (123) of the second frame member (120, 220).

14. The magnetizer (100, 200) as claimed in any one of claims 1 to 13, wherein, in the case that the first frame member (110, 210) and the second frame member (120, 220) are attached to one another, an exterior wall portion (113) of the first frame member (110, 210) and an exterior wall portion (123) of the second frame member (120, 220) are in contact with one another and have the same size and/or the same shape to allow for a congruent arrangement.

15. Using a magnetizer (100, 200) as claimed in any one of claims 1 to 14 for orienting a slurry on a substrate to generate an active material layer.
